# EUROPEAN PATENT SPECIFICATION

(11) **EP 1 115 585 B1**
(45) Date of publication and mention of the grant of the patent: **08.01.2003**
(21) Application number: 99970059.4
(22) Date of filing: 22.09.1999
(51) Int. Cl.: B60B 7/20

(54) **WHEEL COVER ASSEMBLY**
RADZIERBLENDEANORDNUNG
ASSEMBLAGE ENJOLIVEUR

(30) Priority: 23.09.1998 NL 1010164
(43) Date of publication of application: 18.07.2001
(73) Proprietor: Nooijen, Paul Johan Willem Maria, 5342 NM Oss (NL); Van Overbeek, Michiel Wilbert Rombout Maria, 3311 LD Dordrecht (NL); Ramaekers, Gerardus Lodewijk Lambertus Maria, 4844 BN Terheijden (NL)
(72) Inventor: Nooijen, Paul Johan Willem Maria, 5342 NM Oss (NL); Van Overbeek, Michiel Wilbert Rombout Maria, 3311 LD Dordrecht (NL); Ramaekers, Gerardus Lodewijk Lambertus Maria, 4844 BN Terheijden (NL)
(86) International application number: NL9900593
(87) International publication number: WO00020231

(56) References cited:
- EP-A- 0 330 534
- US-A- 3 155 430
- US-A- 5 588 715
- US-A- 5 659 989

## Description

The present invention concerns a wheel cover assembly, which includes a basic part that is constructed to be mounted to a rim of a vehicle's wheel, and a rotatable first body mounted to the basic part with an eccentric centre of gravity.

Such a wheel cover assembly is known in patent no. US-A-5.588.715. The wheel cover assembly is mounted to the rim of a vehicle's wheel in such a way that the shaft of rotation of the first body mainly coincides with the shaft of rotation of the wheel. The coincide of the respective shafts of rotation in assembled condition prevent imbalance of the wheel. The first body consists of a circular disk which is connected to the basic body by means of an almost non-frictional rotational bearing. The eccentric centre of gravity achieves in cooperation with the rotational bearing that the disk will take a mainly steady position with regard to the vehicle, irrespective of the speed of the vehicle.

A drawback to the known wheel cover assembly is that under the influence of force that lay on the surface of the wheel cover, caused by change of the speed of the vehicle, the disk is placed out of its steady position. Further, when the verhicle stops or starts driving with a constant speed, the disk shall oscillate under the influence of the centre of gravity. Because the disk has an almost non-frictional bearing, it will take some time before the disk achieves a steady position.

A similar wheel cover assembly is known from EP-A-330534, which discloses an assembly according to the preamble of claim 1.

The purpose of the present invention is to provide in a wheel cover assembly that does not have the above mentioned drawbacks, in particular a wheel cover assembly that does not oscillate under the influence of speed changes.

This purpose is attained by a wheel cover assembly as described in claim 1.

With such a wheel cover assembly the exerted force of the second body will suppress the oscillating movement of the first body.

By patent US-A-5.659.989 a non-rotating wheel cover assembly is known, by which the first body is structured complementary to the basic part, by which the first body and the basic part are mounted in such a way that an oscillation of the first body and the basic part are reduced with regard to each other. In this non-rotating wheel cover assembly no second body is used to exert power to the first body in order to suppress the oscillating movement of the first body.

Preferably the second body is coupled to the first body by means of a frictional coupling, so depending on the circumstances the first and second body act or move as one body with regard to each other.

In another preferred construction of the wheel cover assembly according the invention, the second body is coupled to the first body by means of electromagnetic power.

Other characteristics and advantages of the wheel cover assembly according the invention shall be clear from the description of the preferred structural design of the non-rotating wheel cover assembly according to the invention shown by drawing:
Figure 1 is an illustration which schematically in cross-section shows a wheel cover assembly mounted to a rim according to the invention, and
Figure 2 is an illustration schematically in cross-section of another construction of the wheel cover assembly mounted to a rim according to the invention.

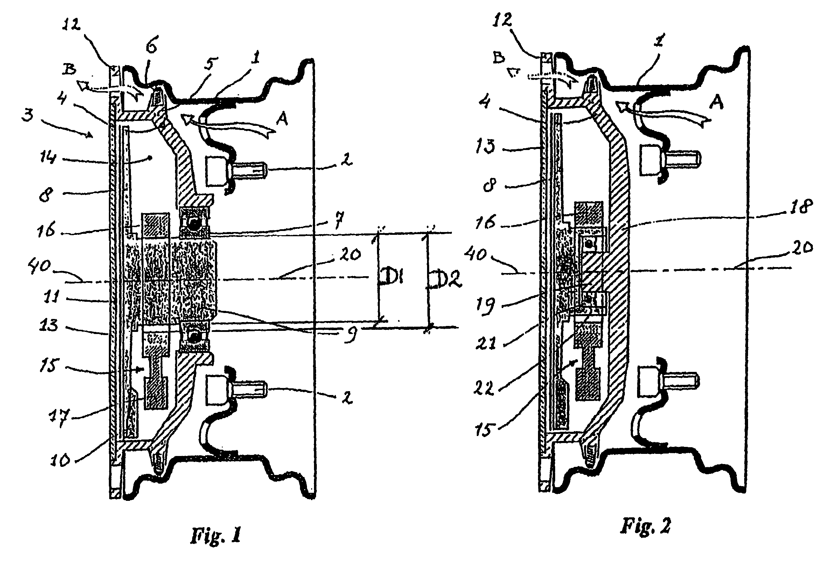

In figure 1 a schematic cross-section is shown of the wheel cover assembly 3 according to the invention that is mounted on a rim 1. On the rim 1 a tire can be mounted in order to form a wheel. The rim 1 can be mounted to a vehicle (not shown) by means of wheelbolts 2. The wheel cover assembly 3 is mounted on the averse side the rim 1 of the vehicle in order to hide the rim 1 and the wheelbolts 2 as much as possible. The wheel cover assembly 3 according to the invention contains a basic part 4 that is mounted on the rim 1 of the wheel. On the basic part 4 of the preferred structural design, radial projections 5 are applied, with which the wheel cover assembly 3 can be clamped to the rim 1. The projections 5 have recessions in which a clamping element 6 is spring-mounted. When mounted, the clamping element 6 is inserted in a circular groove of rim 1. Of course the method of applying the basic part 4 to the rim 1 can be adapted to any type of rim that is commercial obtainable. Further, the basic part 4 can also be mounted to the wheelbolts 2 by means of suitable mounting means. Mainly this means that basic part 4 is mounted motionless to the rim 1 of the wheel.

If required the wheel cover assembly 3 can be provided with locking devices, so the wheel cover assembly 3 can only be mounted or removed by an authorized person. For example, the locking device can be a spring-mounted ring, that is applied in the circular groove of the basic part 4 and which can be fitted inserted in the groove of the rim 1. By means of a suitable spanner the diameter of the spring-mounted ring can be reduced, so the ring can be mounted to or removed from the groove in the rim 1.

The wheel cover assembly 3 further contains a circular disk 8 that can rotate around the rotational shaft 40. The disk 8 is connected fixedly to an axial end of shaft part 9, of which the centerline coincides with the rotational shaft 40 of the disk 8. Consequently the shaft part 9 is placed perpendicularly on the surface of the disk 8. When mounted, the rotational shaft 40 of the disk 8 coincides with the rotational shaft 20 of the rim 1. On an area of the circumference of the disk 8 a weight element 10 is applied through which the disk 8 has an eccentrical centre of gravity.

On the disk 8, at the averse side of the shaft part 9, a sheet 11 with an inscription, picture or the like is applied. Naturally, the inscription or picture can also be applied direclty on the disk 8. In the structural design shown by example, the disk 8 is circular. The disk 8 can, however, also have another shape, for example a triangular or a square. Further, the disk 8 can have the shape of a figure, such as a head, an apple etc. In all structural designs the centre of gravity of the disk 8 is eccentrical to the rotational shaft 40.

On the basic part 4 a flanged edge 12 is applied. As in the rim 1, the flanged edge 12 contains openings for the passage of air ventilation (in the figures indicated with arrows A and B). The flanged edge 12 extends the rim 1. In the surface of the flanged edge 12 a cover plate 13 is mounted on the basic part 4. The cover plate 13 is of transparant material. The cover plate 13 and basic part 4 together form the limitation of a space 14, wherein the disk 8 and the sheet 11 are placed. By using the cover plate 13, the sheet 11 and disk 8 are protected against exterior influences such as rain, dirt and the like.

Finally, the wheel cover assembly 3 in this structural design contains a delay device as a pendulum 15. The pendulum 15 contains a ring 16 which has been slided over the shaft part 9 with a slight clearance, and applied in the shown construction between the disk 8 and the bearing 7. A weight 17 is applied to the ring 16. As a result of the slight clearance between the ring 16 and the shaft part 9, the ring 16 can roll from shaft part 9. At the moment the tangential force becomes larger than the frictional power, the ring 16 shall start to slide with regard to shaft part 9. Then the pendulum 15 shall start to oscillate around the axis of rotation 41. The axis of rotation 41 has a distance to the rotational shaft 40 of disk 8, which corresponds with half the difference between the inner diameter of the ring 16 and the outer diameter of the shaft part 9.

The clearance between the ring 16 and the shaft part 9 is necessary to allow the rotation of the pendulum 15 with regard to the disk 8. If the ring 16 would have been slided over the fitted shaft part 9, it could occur that the friction power is so large that rotation of the pendulum 15 with regard to disk 8 is not possible.

The distance of the centre of gravity of the pendulum 15 with regard to rotational shaft 20 of the rim 1 is different from the distance of the centre of gravity of the disk 8 with regard to rotational shaft 20 of the rim 1. Because of that the pendulum 15 and the disk 8 have different oscillation times. Because of the difference in oscillation time the pendulum 15 and the disk 8 will start moving with regard to each other and a friction power arises between the disk 8 and pendulum 15 that counteracts the mutual movement. The contact surface between the ring 16 and the shaft part 9 cause a friction coupling for the pendulum 15 and the disk 8.

When the vehicle, on which the wheel cover assembly is mounted, stands still and so the wheel is not rotating, the disk 8 and pendulum 15 will take a position under the influence of the centre of gravity with which the centres of gravity of pendulum 15 and disk 8 are mainly vertical underneath the mutual rotational shaft. This position will hereafter be referred to as the "vertical position".

When the vehicle uniformly increases or decreases its speed, for example while driving away, acceleration or breaking during driving, the pendulum 15 and disk 8 turn to a new balance which is different to the vertical position. After the verhicle has increased its speed and drives on with a constant speed, the increase has become equal to zero and disk 8 and pendulum 15 will try to take the vertical position under the influence of the centre of gravity. The disk 8 and pendulum 15 shall now start to oscillate around the vertical position.

The given example is an ideal situation. In reality the speed and acceleration of the vehicle change under several circumstances, for example due to road conditions, gusts of wind, and also change of gear.

As a result of the various distances of the centres of gravity of the pendulum 15 and the disk 8 with regard to rotational shaft 20 of the rim 1, the pendulum 15 and the disk 8 wish to oscillerate with different times of vibration. In the first place this is avoided by a friction power that is present between the contact surface of the ring 16 and the shaft part 9, and the pendulum 15 and disk 8 move as one part.

As will be known, the friction power is directly proportional with the normal force, whereby the friction power cannot exceed a certain maximum value. The maximum value depends on the coefficient of friction between the contact surfaces. When the friction power reaches a certain maximum value, a slip occurs between the contact surfaces and pendulum 15 and disk 8 will start to move with regard to each other. As soon as a slip occurs, the coefficient of friction changes between the contact surfaces. The coefficient of friction during a slip is lower than the coefficient of friction during action. An increase of the normal force, as example during an increased rotational speed of the pendulum 15, does not directly mean the pendulum 15 and disk 8 will immediately oscillate as one part.

During the pendulum oscillation the normal force on the contact surface is at its maximum between the ring 16 and the shaft part 9 when the pendulum 15 passes the vertical position. When the direction of rotation of the disk 8 and the pendulum 15 are opposite to each other, the present friction force between the ring 16 and shaft part 9 will counteract the rotational movement of disk 8 and pendulum 15, whereby the rotation energy will be dissipated. At a suitable ratio of the mass of the weight element 10 and the weight 17 and a suitable ratio of the distances of the centres of gravity of the pendulum 15 and the disk 8 with regard to the shaft of rotation 20 of the rim 1, the combination of disk 8 with the pendulum 15 will relative quickly stand still or merely show an oscillation of which the deflection is not disturbing the reading or looking of the text or picture applied to the disk 8.

The oscillation times mainly depend on the distance of the centres of gravity with regard to the rotational shaft of the rim 1, while the friction force is mainly specified by the size of the weight 17 in connection with the deflection with regard to the vertical position and the rotation speed of the centre of gravity. When the disk 8 has stopped, the disk 8 and pendulum 15 can have turned with regard to each other, whereby the friction coupling between the pendulum 15 and the disk 8 prevents that the pendulum 15 and the disk 8 separately take the original vertical position. The pendulum 15 and the disk 8 now form a oscillation unit of which the centre of gravity is situated below the rotational shaft 40.

For working satisfactory of the pendulum 15 in order to counteract the oscillation movement of the disk 8, is it important that the material of the shaft part 9 and the ring 16 are chosen in such a way that the coefficient of friction between the contact surfaces allows sliding oscillation of the ring 16 with regard to the shaft part 9. The friction power during a slip, however, must be large enough to counteract the oscillating movement of disk 8.

Figure 2 shows a variant of a wheel cover assembly according the invention. In this construction the basic part 4 is structural designed with a closed reverse side 18. The basic part 4 mainly has the shape of a "pan", whereby the reverse side 18 forms the bottom of the "pan". In a simular way as the structural designed example shown in figure 1, a cover plate 13 of transparant material is applied in the flanged edge 12. The cover plate 13 and the basic part 4 define the closed space 14.

In the centre of the basic part 4 an extended cylindrical cam 19 is applied in the space 14, that is mainly coaxial to the rotational shaft 20 of rim 1 in fitted condition of the wheel cover assembly 3. Over the cylindrical cam 19 a fitted roller bearing 21 has been pushed.

The disk 8 is supplied with a mainly cylindrical journal 22, that is coaxial with the centre line of the disk 8. In the free axial surface of the journal 22 a circular recess is applied, in which the roller bearing 21 can be inserted.

The outer diameter of the journal 22 corresponds with the inner diameter of ring 16 of the pendulum 15. In this structural design of the wheel cover assembly according the invention the disk 8 and the pendulum 15 as well as the roller bearing 21 are completely protected against exterior influences. Mainly, pollution by street litter, sand and such is avoided with this structural design. Besides, the axial dimension of the construction shown in figure 2 is smaller than the axial dimension of the structure shown in figure 1.

By another structure of the wheel cover assembly the damping force is an electromagnetic force or power. In order to achieve this, a layer of paramagnetic material is applied on the disk 8, on the side towards the pendulum 15. On the pendulum 15 a permanent magnet is applied of which the magnetic power is defined in connection with the masses of the weight element 10 and weight 17.

A relative movement of the disk 8 and the pendulum 15 with regard to each other shall generate turbulent flows in the layer of electromagnetic material. Through this an electromagnetic force arises, which counteracts the relative movement of the disk 8 and the pendulum 15 and therefore damps an oscillating movement.

Of course it is possible to construct a wheel cover assembly in such a way that the damping force is supplied by friction force as well as by an electromagnetic force.

With the wheel cover assembly according to the invention it is not necessary to apply activators to decelerate the oscillating movement of the disk.

The structural design as described above is given as a non restricted example. It should be clear to the experts that several changes and modifications of the structural examples are possible and considered to be within the scope of the invention as defined in the attached claims.

The method of fitting the basic part 4 can, as an example, be adjusted to the type of rim for which the wheel cover assembly must be suitable.

Another possibility is to fit with a bearing the disk 8 and the pendulum 15 separately with regard to the basic part 4, by which the respective shaft of rotations coincide. The friction coupling between the disk 8 and the pendulum 15 can be achieved in a surface perpendicular on the rotational shaft 40 of the disk 8. With a structured friction coupling in such a way, an adjusting element can be supplied to apply the pressure force between the disk and the pendulum 15. The adjusting element can, as example, be of a coil spring that, with the help of an adjusting screw, can excercise an adjusting force to the pendulum 15 in the direction of the disk 8.

In another variant the disk 8 is supplied with a hollow cylindrical shaped part with an applied groove in the perpendicular wall. The pendulum 15 extends through the groove and can move by sliding over the inner surface of the cylindrical shaped part, by which it seems that the pendulum rotates around the rotation shaft of the disk 8. The disk 8 is assembled with a bearing in the basic part 4 by means of a central shaft part. The pendulum oscillation of the pendulum 15 with regard to the disk 8 is therefore restricted by the length of the groove. When the pendulum 15 reaches the end of the groove, the interchanging of the impuls gives more loss of energy and therefore an extra damping.

By a special application of the wheel cover assembly according the invention the disk 8 has a picture carrying part. The picture is, for example, representative for the verhicle on which the wheel cover is assembled. When the wheel cover has a central recess or a central transparant part of the sizes of the picture, the picture carrying part can extend the recess, respectively be seen behind the transparant part of the wheel cover. Then the picture is always well visable and mainly steady with regard to the vehicle.

## Claims

1. A wheel cover assembly, containing a basic part (4), which is arranged to be fitted on a rim (1) of a wheel of a vehicle, and with mentioned basic part (4) rotatably connected with a first body (8) with an eccentric centre of gravity (10), forming a physical pendulum, the basic part being fixed to the rim of the wheel, wherein on the axis of the basic part (4) a shaft end or shaft stud (9) with a diameter D1 is provided and which is coupled by a bearing (7) to the basic part (4), and the mentioned shaft stud (9) forms an entity with the first body (8), which is executed as a first physical pendulum
**characterized in that**
- the basic part (4) is executed as a housing, which is accessible from the outside,
- between the first body (8) and the basic part (4) on the mentioned shaft stud a second body (15) is mounted, the second body having a bore with diameter D2, wherein D2 is greater than D1, and
- the second body (35) is also executed as a second physical pendulum, wherein the second body (15) is hanging with a diameter D2 around the shaft stud (9) with a diameter D1, wherein the second body (15) will suppress the oscillating movement of the first body (8) by mutual surface resistance.

2. A wheel cover assembly according to claim 1,
**characterised in that**, the second body (15) is a pendulum that can oscillate independantly from the first body (8) and which is connected to the first body by means of a frictional coupling by hanging the second body (15) with diameter D2 around the shaft stud (9) to deliver mutual surface resistance.

3. A wheel cover assembly according to claim 1,
**characterised in that**, the second body (15) has an eccentric centre of gravity, of which the degree of eccentricity differs from the degree of eccentricity of the centre of gravity of the first body (8), and so the oscillating movements of the physical pendulums will differ for an optimal suppression of the oscillating movement of the first body (1).

4. A wheel cover assembly according to claim 1 or 2, **characterised, in that,** the second body (15) can be coupled to the first body (8) by means of electromagnetic force or power provisions for coupling.

5. A wheel cover assembly according to the aforementioned claims, **characterised in that**, a transparant cover (13) covers the outside of the basic part (4) and is connected to the basic part (4), whereby the basic part (4) and the cover (13) define a housing (14), in which the first body (8) and second body (15) are enclosed.

6. A wheel cover assembly according to the aforementioned claims, **characterised in that**, the basic part (4) is provided with a snap coupling for fixation to the rim (1) of the wheel.

7. A wheel cover assembly according to the aforementioned claims, **characterised in that**, locking devices are provided in order to lock the wheel cover assembly to the rim (1) of the wheel.

## Patentansprüche

1. A Rad Decke Versammlung, die ein Grundbestandteil (4) enthält, der arrangiert wird, an einen Rand (1) von einem Rad eines Fahrzeugs angebracht zu werden, und mit erwähntem Basis Teil (4) rotably verbunden mit einem ersten Körper (8) mit einer exzentrischen Mitte der Schwerkraft (10) und so wird Bildung eines physischen pendulum, der in das, dem Basis Teil (4) charakterisiert wird, als ein Gehäuse durchgeführt, das zugänglich von der Außenseite und istRepariert werden im Rand (1) vom erwähnten Rad des Fahrzeugs, worin auf der Achse Teil der Basis (4) ein Schaft Ende oder Schaft Wandpfosten (9) mit einem Durchmesser D1 versorgt und, der von einem Lager (7) zum Basis Teil (4) verkoppelt wird, und der erwähnte Schaft Wandpfosten (9) bildet eine Rechtspersönlichkeit mit dem ersten Körper (8), der durchgeführt wird, als ein (zuerst) physisch pendulum, worin zwischenDer erste Körper (8) und der Basis Teil (4) wird auf dem erwähnten Schaft Wandpfosten ein zweiter Körper (15), worin der Durchmesser der Bohrung D2, worin D1> D2 aufgestellt ist und worin wird der zweite Körper (15) auch als ein (Sekunde) physisch pendulum, worin der zweite Körper (15) von Hängen mit einem Durchmesser D2 um den Schaft Wandpfosten (9) mit einem Durchmesser D1, worin die Sekunde durchgeführt wird verkoppeltKörper (15) wird die schwingende Bewegung des ersten Körpers (8) durch gegenseitigen äußerlichen Widerstand unterdrücken.

2. A Rad Decke Versammlung die entsprechend ist, 1, zu beanspruchen, wird charakterisiert der in das, dem zweiten Körper (15) ist ein pendulum der kann schwingen unabhängig vom ersten Körper (8) und der an den ersten Körper mittels ein frictional wird angeschlossen verkoppelt durch Hängen dem zweiten Körpers (15) mit Durchmesser D2 um den Schaft Wandpfosten (9), gegenseitigen äußerlichen Widerstand zu liefern.

3. A Rad Decke Versammlung die entsprechend ist, 1, zu beanspruchen, wird charakterisiert der in das, dem zweiten Körper (15) hat eine exzentrische Mitte der Schwerkraft, von den der Grad der Exzentrizität abweicht vom Grad der Exzentrizität von der Mitte der Schwerkraft vom ersten Körper (8), und deshalb die schwingenden Bewegungen des physischen pendulums für eine ideale Unterdrückung der schwingenden Bewegung vom ersten Körper (1) werden abweichen.

4. A Rad Decke Versammlung die entsprechend ist, 1 oder 2, zu beanspruchen, sind charakterisiert worden die in das, dem zweiten Körper (15) kann zum ersten Körper (8) mittels elektromagnetische Kraft von Kraft Vorkehrungen für Verkoppeln verkoppelt werden.

5. A Rad Decke Versammlung gemäß dem aforementioned Ansprüchen, die in das, einer durchsichtigen Decke (13) charakterisiert werden, bedeckt das Ganze und wird an den Grundbestandteil (4), wobei der Grundbestandteil (4) angeschlossen und die Decke (13) definiert ein Gehäuse (14), in den der ersten Körper (8) und zweiter Körper (15) eingeschlossen wird.

6. A Rad Decke Versammlung gemäß dem aforementioned Ansprüchen, die in das, dem Grundbestandteil (4) charakterisiert werden, wird mit einem Knacken versorgt, das für fixation zum Rand (1) vom Rad verkoppelt.

7. A Rad Decke Versammlung gemäß dem aforementioned Ansprüchen, die in das charakterisiert werden, werden das Vorrichtungen versorgt verschließt, um zu verschließen, die Rad Decke Versammlung zum Rand (1) vom Rad.

## Revendications

1. L'assemblée de couverture de roue, contenir une partie fondamentale (4), qui est arrangé être ajusté sur un bord (1) d'une roue d'un véhicule, et avec la partie de base mentionnée (4) rotably connecté avec un premier corps (8) avec un centre excentrique de gravité (10) et si former un pendule physique, caractérisé dans cela, la partie de base (4) est exécuté comme un logement, qui est accessible de l'extérieur etréparé dans le bord (1) de la roue mentionnée du véhicule, en quoi sur l'axe de la partie de base (4) un clou de fin d'arbre ou arbre (9) avec un diamètre D1 est fourni et qui est couplé par une direction (7) à la partie de base (4) et le clou d'arbre mentionné (9) forme une entité avec le premier corps (8), qui est exécuté comme un (premier) le pendule physique, en quoi entrele premier corps (8) et la partie de base (4) sur l'arbre mentionné cloute un deuxième corps (15) est monté, en quoi le diamètre du perce est D2, en quoi D1> D2 et en quoi le deuxième corps (15) est aussi exécuté comme un (la seconde) le pendule physique, en quoi le deuxième corps (15) est couplé en pendant avec un diamètre D2 vers le clou d'arbre (9) avec un diamètre D1, en quoi la secondeLe corps (15) éliminera le mouvement qui oscille du premier corps (8) par la résistance de surface réciproque.

2. S'accorder d'assemblée de couverture de roue de pour réclamer 1, caractérisé dans cela, le deuxième corps (15) est un pendule qui peut osciller indépendamment du premier corps (8) et qui est connecté au premier corps au moyen d'un frictional qui couple en pendant le deuxième corps (15) avec le diamètre D2 vers le clou d'arbre (9) livrer la résistance de surface réciproque.

3. S'accorder d'assemblée de couverture de roue pour de réclamer 1, caractérisé dans cela, le deuxième corps (15) a un centre excentrique de gravité, de qui le degré d'excentricité diffère du degré d'excentricité du centre de gravité du premier corps (8), et donc les mouvements qui oscillent des pendules physiques différeront pour une suppression optimale du mouvement qui oscille du premier corps (1).

4. A roue couverture assemblée réclamer 1 ou 2, dans , le deuxième (15) peut être couplé le premier (8) au moyen de de pouvoir pour .

5. L'assemblée de couverture de roue de selon les réclamations de aforementioned, caractérisées dans cela, une couverture transparente (13) couvre l'ensemble et est connecté à la partie fondamentale (4), whereby la partie fondamentale (4) et la couverture (13) définit un logement (14), dans lequel le premier corps (8) et le deuxième corps (15) sont enclos.

6. L'assemblée de couverture de roue de selon les réclamations de aforementioned, caractérisées dans cela, la partie fondamentale (4) est fourni avec un claquement qui couple pour fixation au bord (1) de la roue.

7. L'assemblée de couverture de roue de selon les réclamations de aforementioned, caractérisées dans cela, les appareils qui verrouillent est fournie afin de verrouiller l'assemblée de couverture de roue au bord (1) de la roue.
